Europäisches Patentamt

European Patent Office

Office européen des brevets

(11) Publication number: **0 323 793**
**A1**

## EUROPEAN PATENT APPLICATION

(21) Application number: 88440108.4

(22) Date of filing: 22.12.88

(51) Int. Cl.4: **F16L 47/02 , F16L 41/04 , B29C 65/22**

(30) Priority: 07.01.88 JP 1732/88

(43) Date of publication of application:
**12.07.89 Bulletin 89/28**

(84) Designated Contracting States:
**CH DE FR GB LI**

(71) Applicant: HITACHI METALS, LTD.
Chiyoda Building 1-2 Marunouchi 2-chome
Chiyoda-Ku Tokyo 100(JP)

(72) Inventor: Hyroshi, Ohya
1570-1, Washinosu Yoro-cho
Yoro-gun Gifu(JP)
Inventor: Takeshi, Kato
109, Tayu-cho
Kuwanashi, Mie(JP)

(74) Representative: Bossard, Jacques-René
Cabinet MEYER & COURTASSOL Bureau
EUROPE 20 Place des Halles
F-67000 Strasbourg(FR)

(54) **Method for connecting plastic pipes.**

(57) A plastic socket pipe joint (1) comprising a cylindrical plastic socket pipe joint body (11), an electric heating wire (12) buried in the cylindrical inner surface (14) of the plastic socket pipe joint body (11), and two connector pins (13) embedded in the plastic socket pipe joint body (11). The lower ends of the connector pins (13) are connected to both ends of the electric heating wire (12) and the upper ends thereof protrude from the cylindrical outer surface of the plastic socket pipe joint body (11). Two blind holes (15) are formed in the plastic socket pipe joint body (11) near the connector pins (13) for receiving respective thermocouples (332). The plastic pipe joint (1) is welded to a plastic pipe (2A) by applying current to the electric wire (12). The temperature of the plastic pipe joint (1) is measured with the thermocouples (332) so that when the temperature drops to a predetermined value, the application of current is suspended.

FIG. 1

## FIELD OF THE INVENTION

This invention relates to plastic joints, and methods of connecting plastic pipe joints to plastic pipes.

## BACKGROUND OF THE INVENTION

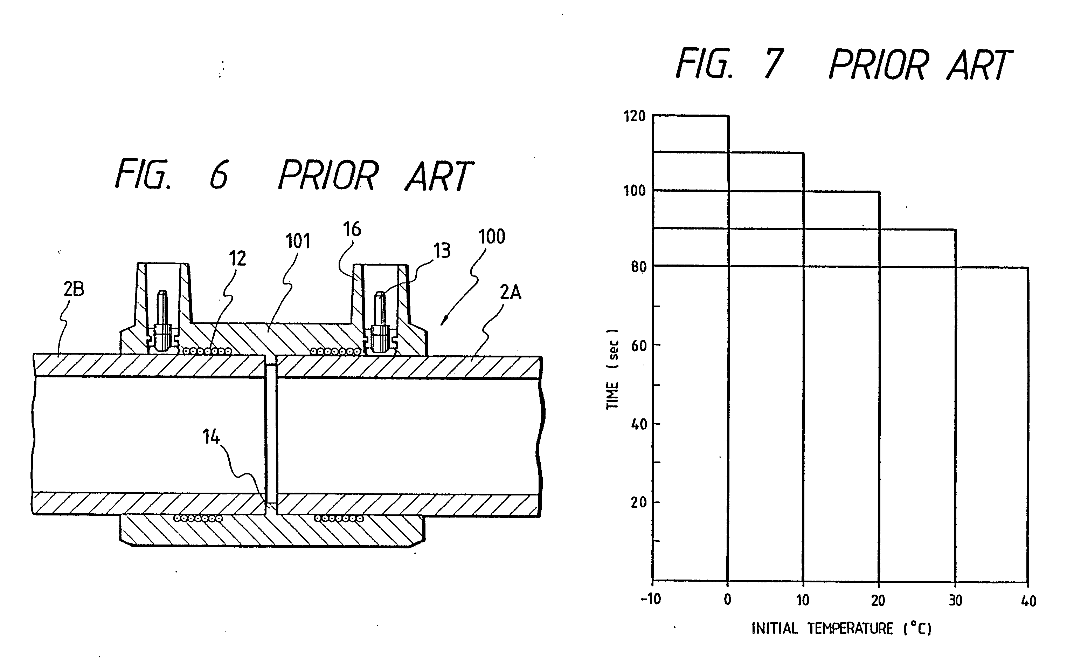

Fig. 6 is a sectional view showing a conventional plastic pipe joint and conventional plastic pipes connected thereto. More specifically, one end portion of the plastic pipe joint 100 is connected to the plastic pipe 2A by electric fusion welding, and the other end portion is connected to the plastic pipe 2B similarly by electric fusion welding, so that the plastic pipes 2A and 2B are joined together.

The plastic pipe joint 100 comprises a pipe joint body 101, an electric heating wire 12, and two connector pins 13. The pipe joint body 101 is cylindrical and is made of plastic, and it has an annular inside rim 14, which protrudes from the inner wall at the middle of the joint body 101. The electric heating wire 12 is coiled and buried in the pipe joint body 101. Base end portions of the two connector pins 13 are embedded in the pipe joint body 101 at respective ends thereof, and are connected to respective ends of the electric heating wire 12. Upper end portions of the connector pins 13 protrude from the cylindrical outer wall of the pipe joint body 101. Cylindrical protrusions 16 are formed on the outer wall of the pipe joint body 101 to surround the connector pins 13.

The plastic pipes 2A and 2B and the plastic joint 100 are connected in the following manner. The plastic pipes 2A and 2B are inserted into the plastic pipe joint 100 from both ends until they reach the annular inside rim 14. Then connectors (not shown) are engaged with the connector pins 13 provided at both ends of the plastic pipe joint 100, respectively. Current is applied through the connectors to the electric heating wire 12 in the plastic pipe joint 100 so that heat is generated by the heating wire 12. The heat melts the cylindrical inner wall of the plastic pipe joint 100 and the cylindrical outer walls of the inserted parts of the plastic pipes 2A and 2B, so that the pipes 2A and 2B are welded to the joint 100. Thereafter, the connectors are removed. from the plastic pipe joint 100.

In the conventional pipe connecting operation of Fig. 6, the applicaton of current is controlled in the following manner. First, the ambient temperature and the initial temperature of the plastic pipe joint 100 are measured. Then, a period of time for application of current to the heating wire 12 in the plastic pipe joint 100 (hereinafter referred to as "a current application time period") is determined according to the measured temperatures. Current is then applied to the heating wire for the current application time.

One example of the relationship between the current application time period and the initial temperature is shown in Fig. 7. As is apparent from Fig. 7, when the initial temperature ranges from -10°C to 0°C, the current application time period is 120 sec.; when the initial temperature is in ranges from 0°C to 10°C, the current application time period is 110 sec.; when the initial temperature ranges from 10°C to 20°C, the current application time period is 100 sec.; when the initial temperature ranges from 20°C to 30°C, the current application time period is 90 sec.; and when the initial temperature ranges from 30°C to 40°C, the current application time period is 80 sec.

The above-described current application control suffers from the disadvantages that it is rather difficult to determine a suitable current application time period for two reasons. First, the current application time period should be determined not only from the initial temperature of the plastic pipe Joint but also from the size of the plastic pipe joint and the type of plastic material. Second, the variation in electrical resistance of the heating wire or in the current or voltage applied to the heating wire will offset the temperature and require changes in the current time period.

U.S.P. 4,684,417 discloses another conventional plastic pipe joint in which a recess portion is provided at a part of a plastic pipe joint and the change of characteristics of a welded material in the recess portion is detected. That is, the change of a pressure due to expansion of the material or the change of a temperature is detected so that the current application time period is controlled. However, the shape of expansion of the material is not definite and the detection of temperature is apt to be subjected to the influence of an ambient temperature. Accordingly, the detection is not stable.

## SUMMARY OF THE INVENTION

Accordingly, an object of the present invention is a method of connecting a plastic pipe joint to plastic pipes by electrical fusion welding in which the current application time period need not be determined.

A further object of the present invention is a method of connecting a plastic pipe joint to plastic pipes by electrical fusion welding in which the appropriate time for removal of the fusion plugs may be displayed.

Yet another object of the present invention is a method for connecting a plastic pipe joint to plastic pipes by electrical fusion welding in which both the time at which the application of current is suspended and at which the plugs can be disconnected from the plastic pipe joint may be signaled to an operator by acoustic means.

A further object of the present invention is an improved joint for connecting plastic pipes.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

To achieve the foregoing and other objects, and in accordance with the purposes of the invention as embodied and broadly described herein, there is provided a plastic socket pipe joint comprising a substantially cylindrical plastic socket pipe joint body, and an electric heating wire buried in the cylindrical inner surface of the plastic socket pipe joint body. Two connector pins are embedded in the plastic socket pipe joint body in such a manner that the lower ends thereof are connected to respective ends of the electric heating wire, and the upper ends of the connector pins are protruded from the cylindrical outer surface of the plastic socket pipe joint body. Two holes for receiving temperature measuring means are formed in the plastic socket pipe joint body near the respective connector pins.

In accordance with the purposes of the invention, there is further provided a method for connecting a plastic socket pipe joint to a plastic pipe by electric fusion welding comprising the steps of inserting the plastic pipe into the plastic socket pipe joint, engaging fusion welding plugs to the plastic socket pipe joint, each fusion welding plug comprising a connector engaged with a connector pin of the plastic socket pipe joint, a thermocouple engaged with a blind hole of the plastic socket pipe joint without making a space between the thermocouple and the blind hole, and a holder for holding the connector pin and the thermocouple as one unit, applying current through the connectors of each of the fusion welding plugs to an electric heating wire which is embedded in the plastic socket pipe joint to cause the electric heating wire to generate heat, measuring the temperature rise at the bottom of the blind hole with the thermocouples in each of the fusion welding plugs, and suspending the application of current to the electric heating wire when the temperature of said plastic socket pipe joint body reaches a predetermined value.

According to the present invention, the temperature at the bottom of the blind hole of the plastic socket pipe joint is detected by the thermocouple, and the control of the current application to the plastic socket pipe joint is carried out by using the detected temperature. Accordingly, it is not necessary to determine the troublesome current application time period, and exact and stable connection can be attained. Further, since the thermocouple closely contacts the blind hole, a welded material does not expand into the blind hole after the thermocouple is inserted into the hole. Accordingly, the thermocouple always detects the temperature of welded portion at the bottom of the blind hole of the plastic socket pipe joint and the accuracy of controlling the current application can be attained. Also, the present invention provides suitable dimensions and relative relation of the plastic socket pipe joint body, the heating wire and the blind hole.

## BRIEF DESCRIPTION OF THE DRAWINGS

In the accompanying drawings:

Fig. 1 is a sectional view showing a plastic socket pipe joint into which a plastic pipe is inserted and welded thereto according to the present invention;

Fig. 2 is a front view of a control device body employed in welding the plastic socket pipe joint or a plastic branch pipe joint to a plastic pipe according to the present invention.

Fig. 3 is a graphical representation indicating the variations of temperature of the plastic socket pipe joint after application of current to an electric heating wire embedded therein;

Fig. 4 is a sectional view showing the plastic branch pipe joint which is mounted on a plastic pipe and welded thereto according to the invention;

Fig. 5 is a sectional view taken along line A-A in Fig. 4;

Fig. 6 is a sectional view showing a conventional plastic pipe joint into which plastic pipes are inserted and welded thereto; and

Fig. 7 is a graphical representation indicating initial temperature vs. current application time for welding the conventional plastic pipe joint to the plastic pipes of Fig. 6

## DETAILED DESCRIPTION

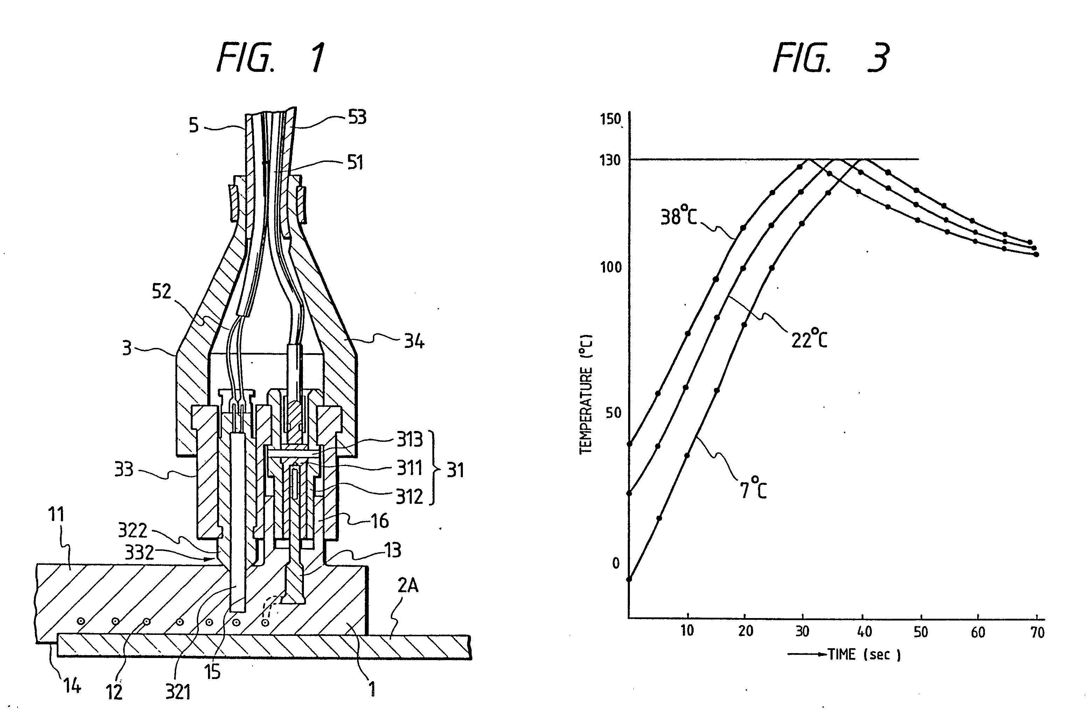

One example of a plastic socket pipe joint according to the present invention will be described with reference to Fig. 1.

As shown in Fig. 1, a fusion welding plug 3 is coupled to one end portion of a plastic socket pipe joint 1 to weld plastic pipe 2A thereto. The plastic pipe 2A is substantially the same as the plastic pipe shown in Fig. 6. The plastic socket pipe joint 1 is similar to the plastic pipe joint shown in Fig. 6, in that it comprises a socket pipe joint body 11, an electric heating wire 12, and two connector pins 13. The electric heating wire 12 is coiled more tightly at the ends of the joint body than at the middle thereof and buried in the inner wall of socket pipe joint body 11. The connector pins 13 are embedded in the socket pipe joint body 11. Cylindrical protrusions 16 are formed on the outer wall of the pipe joint body 11 and surround the connector pins 13. The plastic socket pipe joint 1 is symmetrical about a first end of the pipe joint opposite to the end thereof to which fusion plug 3 is coupled so that the plastic socket pipe joint 1 comprises two identical portions having identical elements.

The plastic socket pipe joint 1 is different from that of Fig. 6 in that each end is formed with a blind hole 15 near cylindrical protrusion 16. The blind hole 15 receives a temperature measuring means such as a thermocouple, shown generally at 332. Thermistors or resistance bulbs may be used instead of thermocouples. The thermocouple 332 comprises a thermocouple body 321, which is engaged with the blind hole without making a space between the thermocouple body and the blind hole, and a thermocouple case 322 covering the thermocouple body 321. The distance between the bottom of the blind hole 15 and an outer periphery, opposite to the bottom, of the electric heating wire 12 is made a little larger than that between the inner surface of the socket pipe joint body 11 and an outer periphery, opposite to the inner surface, of the wire 12. If the distance is much larger, the measured temperature is near the atmospheric temperature as in the prior art, so that the accuracy of controlling pipe connection becomes inferior. On the other hand, if the distance is much smaller, the measured temperature is near the temperature of the electric heating wire and is different from the average temperature of a fused portion, and further the electric heating wire may contact the thermocouple when fusion occurs. Thus it is not preferable to decrease the distance excessively. It is preferable that the distance between the bottom of the blind hole 15 and the outer periphery of the electric heating wire 12 is 0.6 - 1.2 mm, the outer diameter of the electric heating wire is 0.4 - 0.6 mm, and the distance between the inner surface of the socket pipe joint body 11 and the outer periphery of the electric heating wire 12 is 0.5 - 0.6 mm.

The fusion welding plug 3 will be described with reference to Fig. 1. The plug 3 is engaged with the connector pin 13 and the blind hole 15 of the plastic socket pipe joint. The plug comprises a connector which is shown generally at 31, and which is engaged with the connector pin 13. The connector comprises a connector bushing 311 having a through hole into which an end of the connector pin 13 is inserted, a bushing case 312 covering the connector bushing 311, and a connecting pin 313 connecting the connector bushing 311 to the bushing case 312. Each of the plugs further comprises a thermocouple 332, a holder 33 which holds the thermocouple 32 and the connector 31 together, and a cap 34 coupled to the holder. The holder 33 holds the connector 31 and the thermocouple 332 in such a manner that the connector 31 and the thermocouple 332 are parallel to each other. The connector 31 and the thermocouple 332 are detachably mounted in the holder 33. More specifically, the holder 33 holds the connector 31 and the upper and middle portions of thermocouple 332 together.

The fusion welding, plug 3 is connected to a cord 5 comprising a power cable 51, lead wires 52, and protective tubes 53 covering the power cable 51 and the lead wires 52. The power cable 51 is connected to the upper end of the connector bushing 311, and the lead wires 52 are connected to the thermocouple body 321. The upper end portion of the cap 34 is fitted around the protective tubes 33. The lower end portion of the cap 34 is fitted on the upper end portion of the holder 33 and covers the connection between the power cable 51 and the connector bushing 311 and the connection between the thermocouple body 321 and the lead wires 52.

Now, a method of welding the plastic pipes 2A to the plastic socket pipe joint 1 will be described. First, the plastic pipes 2A (only one shown) are inserted into the plastic socket pipe joint 1 from both ends until they reach the annular inner rim 14 formed on the inner wall of the pipe joint 1. A fusion welding plug 3 is then coupled to each end of the plastic socket pipe joint 1. By this operation, the connectors 31 of the plugs 3 are engaged with the connector pins 13 provided at the ends of the pipe joint. The thermocouples 332 are inserted into the blind holes 15 so that the thermocouples closely contact the blind holes and the lower ends of the thermocouples 332 contact the bottoms of the blind holes 15. Current is then controllably applied to the connector pins 13.

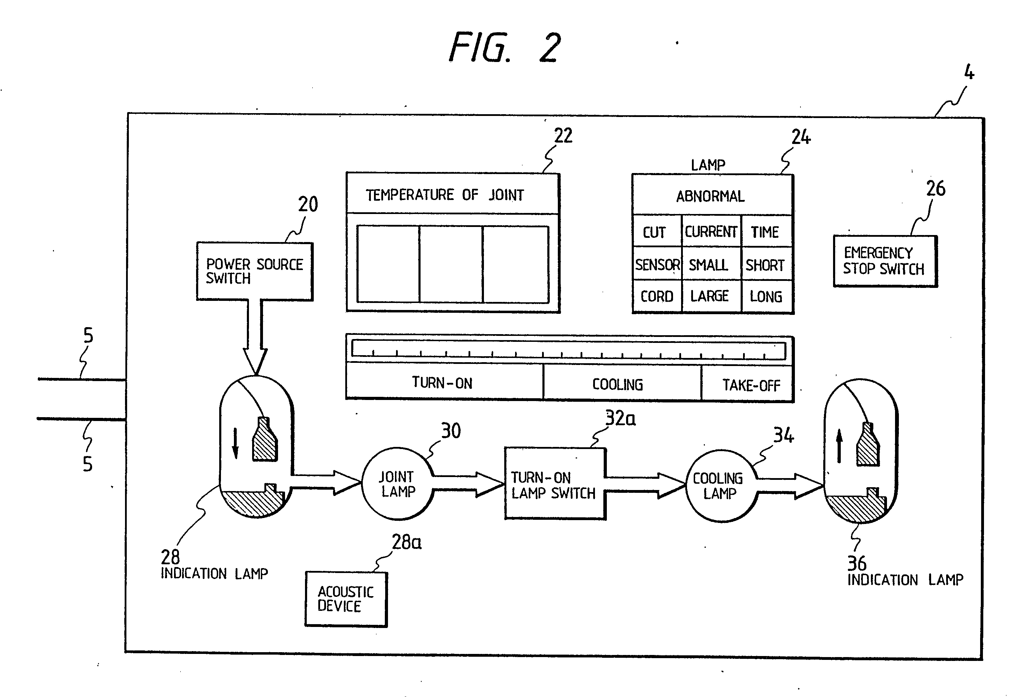

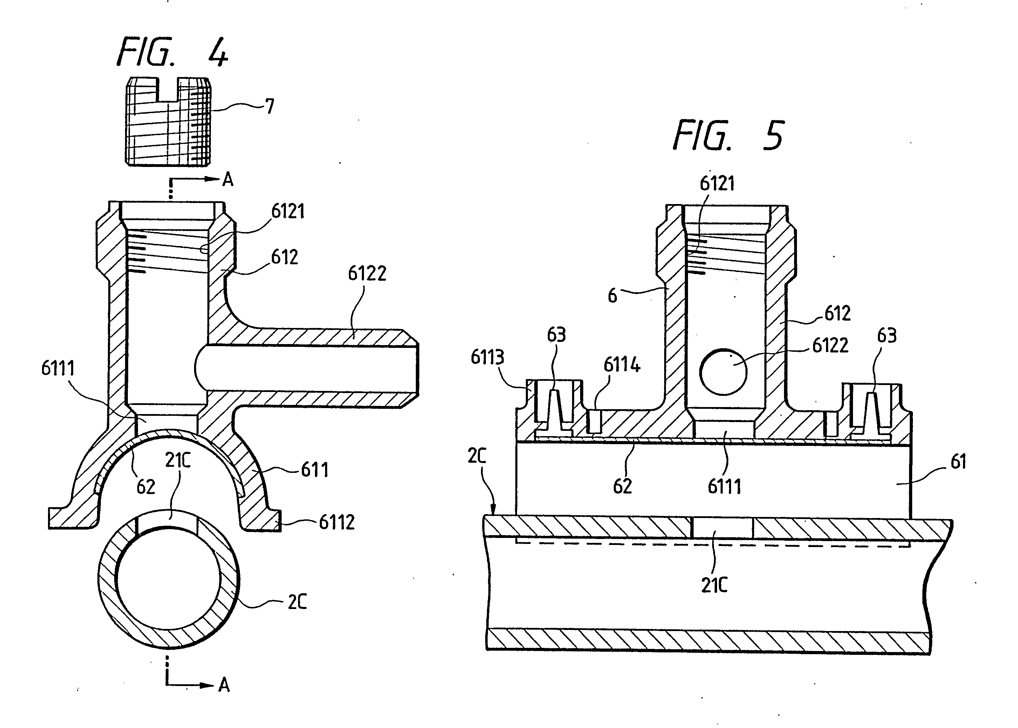

Current application control will be described with reference to Figs. 2 and 3. Fig. 2 is a front of a control device 4 that is connected to the cords 5 that are electrically connected to the fusion welding plugs 3. A power switch 20 of the control device 4 is turned on to apply current to the electric heating wire 12 in the plastic socket pipe joint 1. This causes the heating wire to generate heat to melt the cylindrical inner wall of the plastic socket pipe joint 1 and the outer walls of the inserted parts of the plastic pipes 2A. At the same time, the temperature rise of the plastic socket pipe joint 1 is continuously measured with the thermocouple 332 of the fusion welding plug 3 and is displayed on the control device body 4 on temperature readout device 22.

The maximum value to which the temperature of the plastic socket pipe joint 1 may be increased by the heat generated by the heating wire 12 is preset in the control device 4. For example, the predetermined value for the temperature of the plastic socket pipe joint 1 is suitably about 130°C in the case where the plastic socket pipe joint 1 and the plastic pipes 2A are made of middle-density polyethylene. When the temperature of the plastic socket pipe joint 1 is increased to the predetermined value by the heat generated by the heating wire, the power switch 20 is turned off to suspend application of current and a cooling lamp 34 is turned on. The control device may be designed so that sound generating means such as a buzzer 28a is operated to indicate the suspension of the application of current to the plastic socket pipe joint 1. After the application of current is suspended, the plastic socket pipe joint and the plastic pipes are welded together but must be cooled down.

After the suspension of the application of current to the heating wire in the plastic socket pipe joint 1, the temperature of the plastic socket pipe joint 1 is continuously measured and displayed. In this connection, the temperature at which the fusion welding plugs 3 can be removed from the plastic socket pipe joint 1 is also predetermined. More specifically, a temperature at which the welds of the plastic socket pipe joint 1 and the plastic pipes 2A are not adversely affected by external forces is predetermined. When the temperature of the plastic socket pipe joint 1 reaches the predetermined value, sound generating means such as a buzzer 28a is operated to inform the operator that the fusion welding plugs 3 may be removed from the plastic socket pipe joint 1. The predetermined temperature is suitably about 60°C in the case where the plastic socket pipe joint 1 and, the plastic pipes 2A are of middle-density polyethylene.

Fig. 3 indicates the variations in temperature of the plastic socket pipe ]oint 1 in the cases where, in welding the plastic pipes 2A to the plastic socket pipe joint 1, the initial ambient temperatures were -7°C, 22°C and 38°C, respectively.

The changes in the display on the display panel of the control device 4 will be described with reference to Fig. 2 in more detail. When the power switch 20 of the control device body 4 is turned on, an instruction lamp for requesting the operator to connect the fusion welding plugs 3 to the plastic socket pipe joint 1 is turned on. Upon completion of the connection of the plugs 3, a connection lamp 28 is turned on. If, in this case, the thermocouples 332, the electric heating wire 12, the power cables 51 and/or the lead wires 52 are broken, then a wire breakage lamp in an abnormal condition indicating lamp group 24 is turned on, but the connection lamp 28 is not turned on.

After the connection lamp 28 is turned on, a current application lamp/switch 32a is depressed. The current application lamp/switch 32a remains turned on until the application of current is suspended. If, in this operation, the current applied is excessively large (or small), then an abnormal condition indicating lamp 24 adapted to indicate the fact that the current applied is excessively large (or small) is turned on.

When the application of current is automatically suspended, the current application lamp/swith 32a is turned off, and a cooling lamp 34 is turned on. When the temperature of the plastic socket pipe joint is decreased to a predetermined value at which the fusion welding plugs 3 can be disconnected from the pipe joint, the cooling lamp 34 is turned off while another instruction . or indication lamp 36 is turned on to request the operator to disconnect the plugs 3 from the plastic socket pipe joint 1. An acoustic device (buzzer) 28a is also activated to alert the operator. When the period of time for which the current application lamp/switch 32a or the cooling lamp 34 is kept turned on is extremely short or long, an abnormal condition indicating lamp is turned on to inform the operator of the abnormal condition. When any one of the abnormal condition indicating lamps is turned on, an emergency stop switch 26 may be depressed to disconnect the control device body 4 from the power source.

A "JOINT TEMPERATURE" display lamp continuously indicates the temperature of the bottom of the blind hole 15 in the plastic socket pipe joint 1 which is measured by the thermocouple 332 of the fusion welding plug.

Each of the "CURRENT APPLICATION", "COOLING" and "REMOVAL" lamps indicates for instance 0%, 10%, 20%...100% in a bar graph mode. For instance in the case where the temperature of the plastic socket pipe joint is 20°C before current is applied thereto, the predetermined temperature at which the application of current should be suspended is 130°C. At a time during the application of current when the temperature of the plastic socket pipe joint is 75°C, the "CURRENT APPLICATION" lamp indicates 50% to reflect that the pipe joint has been heated to a temperature that is 50% of the predetermined temperature. Similarly, in the cooling mode, if the predetermined temperature at which the application of current should be suspended is 130°C and the fusion welding plugs can be removed from the plastic socket pipe joint at 60°C, when the temperature of the plastic socket pipe joint is 100°C, the bar graph of the "COOLING" lamp indicates 42.9%

The above-described "JOINT TEMPERATURE" display lamp, and "CURRENT APPLICATION," "COOLING," and "REMOVAL" lamps indicate the degree of advance of the current application, the degree of advance of the cooling operation, and the percentage of possibility of removing of the fusion welding plugs. If only a pilot lamp indicating the application of current were used, it would be impossible to tell when the application of current has ended. This difficulty is eliminated by the provision of the "CURRENT APPLICATION" lamp from which it can be determined approximately when the application of current has ended.

Now, a plastic pipe joint in the form of a branch which is adapted to be connected to a plastic pipe will be described with reference to Figs. 4 and 5. The details of the fusion welding plug 3 and the control device 4 are the same as discussed above with respect to Fig. 1.

As shown in Figs. 4 and 5, the plastic pipe 2C has a through-hole 21C that extends from the outer wall to the inner wall. The plastic branch pipe joint 6 comprises a plastic branch pipe joint body 61, an electric heating wire 62 and two connector pins 63. The plastic branch pipe joint body 61 is made up of a saddle part 611 in the form of a half cylinder, and a cylindrical body part 612 that extends from the periphery of a through-hole 6111 formed at the center of the saddle part 611 in such a manner that the cylindrical body part 611 protrudes radially outwardly of the saddle part 611. Both side edges of the saddle part 611 extend radially outwardly to form a pair of protrusions 6112 which are used to temporarily fix the branch pipe joint body 61 to the plastic pipe 2C. The cylindrical body part 612 has engaging means, for instance a female thread 6121, formed in the inner wall of the upper portion of the cylindrical body part 612 so that the cylindrical body part 612 is closed with a plug 7 engaged with the female thread 6121. The cylindrical body part 612 may have a branch pipe 6122 at the middle as shown in Fig. 4, to which a pipe (not shown) is connected.

The electric heating wire 62 is coiled and buried in the inner wall of the saddle part 611. The two connector pins 63 are formed in the saddle part 611 in such a manner that their base ends are connected to respective ends of the electric heating wire 62, and their upper end portions protrude from the outer wall of the saddle part 62. As in the above-described plastic socket pipe joint of Fig. 1, each of the connector pins 63 is surrounded by a cylindrical protrusion 6113, and a blind hole 6114 for receiving a thermocouple is formed near the cylindrical protrusion 6113.

Now, a method of welding the plastic branch pipe joint 6 to the plastic pipe 2C will be described. First, the saddle part 611 of the plastic branch pipe joint 6 is temporarily mounted on the plastic pipe 2C in such a manner that the through-hole 6111 of the saddle part 611 is in alignment with the through-hole 21C of the plastic pipe 2C.

The remaining steps in the method are the same as those in the above-described method of welding the plastic socket pipe joint 1 to the plastic pipes 2A of Fig. 1. The fusion welding plugs 3 are then coupled to the end portions of the plastic branch pipe joint 6. By this operation, the connectors 31 of the plugs 3 are engaged with the connector pins 63 formed at the ends of the pipe joint 6. Temperature measuring means, such as a thermocouple 332, is inserted into each blind, hole 6114 so that the lower ends of the thermocouple is in contact with the bottom of the blind hole.

Current is then applied through the plugs 3 to the electric heating wire 62 to cause the wire 62 to generate heat which melts the cylindical inner wall of the plastic socket pipe joint 6 and the outer walls of the inserted parts of the plastic pipes 2C. At the same time, the temperature rise at the bottom of the blind hole is continuously measured with the thermocouples 332 of the plugs 3. When the temperature of the branch pipe joint 6 reaches a predetermined value, the application of current to the electric heating wire 62 is suspended and acoustic means such as a buzzer is activated. Upon suspension of the application of the current, the plastic branch pipe joint and the plastic pipes which have been welded together, are allowed to cool down.

After the suspension of the application of current, the temperature of the plastic branch pipe joint 6 is continuously measured with the thermocouples 332. When the temperature of the branch pipe joint 6 is decreased to a predetermined value to which the plugs 3 can be removed from the branch pipe joint 6, acoustic means such as a buzzer is operated to inform the operator of the fact that the plugs 3 can be disengaged from the plastic branch pipe joint 6.

As is apparent from the above description, the method of the invention provides for welding the plastic pipe joint to the plastic pipe without the need for the determination or estimation of the current application time, which is difficult. Furthermore, in the method of the invention, the suitable time for the removal of the fusion welding plugs is displayed, which prevents the problem of removing the plugs too early or too late. Moreover, in the method of the invention, acoustic means signal the operator when the application of current is suspended or when the plugs can be disconnected from the plastic pipe joint, and therefore it is unnecessary for the operator to watch the control device body at all times. In addition, since the operator is signaled when the application of current is suspended, he can determine approximately when the plugs can be disconnected from the plastic pipe joint. Furthermore, as the fusion welding plug holds the connector and the thermocouple as one unit, the connector and the thermocouple can be engaged with the plastic pipe joint simultaneously. Finally, the provision of the thermocouples in the blind holes makes it possible to quickly detect the temperature rise at the bottom of the blind hole.

## Claims

1. A plastic socket pipe joint assembly for joining the ends of two pieces of plastic pipe comprising:
a plastic socket joint body having an inner surface and an outer surface, said inner surface receiving the ends of the pieces of plastic pipe;
an electric heating wire embedded near the inner surface of said plastic socket joint body, said electric heating wire being coiled more tightly at the ends of said joint body than at the middle of said joint body;
a first connector pin electrically connected to one end of said heating wire and a second connector pin electrically connected to the other end of said heating wire, said first and second connector pins adapted to be connected to a current supply means to enable a current to flow between said first connector pin and said second connector pin and through said electric heating wire; and
a first blind hole in said joint body proximate the first connector pin and a second blind hole in said joint body proximate the second connector pin, said first and second holes disposed near said electric heating wire and adapted to receive temperature sensing means for sensing the temperature of the plastic joint body proximate said first and second connector pins.

2. The plastic socket pipe joint assembly as claimed in claim 1, wherein a first distance between a bottom of one of said first and second holes and an outer periphery, opposite to said bottom, of said electric heating wire is made a little larger than a second distance between an inner surface of said socket joint body and an outer periphery, opposite to said inner surface, of said electric heating wire.

3. The plastic socket pipe joint assembly as claimed in claim 2, wherein said first distance is 0.6 - 1.2 mm.

4. The plastic socket pipe joint assembly as claimed in claim 1, wherein each of said temperature sensing means comprises a thermocouple, said thermocouple. being inserted into one of said first and second blind holes without making a space between said thermocouple and said one of said blind holes, and sensing the temperature at a bottom of said one of said blind holes.

5. A plastic branch pipe joint comprising:
a plastic branch pipe joint body including a substantially semi-cylindrical saddle part having a through-hole formed substantially in the outer of said saddle part;
a cylindrical body extending from the periphery of said through-hole and protruding radially outwardly of said saddle parts, said cylindrical body having engaging means at a radially outer end thereof;
an electric heating wire buried in an inner surface of said saddle part of said branch pipe joint body;
two connector pins embedded in said saddle part of said branch pipe joint body and having respective lower end portions connected to respective ends of said electric heating wire, and respective upper end portions protruding from the outer surface of said saddle part;
a temperature sensing means provided in said saddle part proximate each of said connector pins for sensing the temperature of said saddle part; and
a first blind hole proximate said first connector pin and a second blind hole proximate said second connector pin, said first and second blind holes disposed near said electric heating wire and adapted to receive said temperature sensing means.

6. The plastic branch pipe joint as claimed in claim 5, wherein each of said temperature measuring means comprises a thermocouple, said thermocouple being inserted into one of said blind holes without making a space between said thermocouple and said one of said blind holes, and sensing the temperature at a bottom of said one of said blind holes.

7. A method of connecting a plastic socket pipe joint to an end of each of two sections of plastic pipe by electric fusion welding comprising the steps of:
inserting the ends of the plastic pipes into the plastic socket pipe joint;
engaging fusion welding plugs in the plastic socket pipe joint, each of the fusion welding plugs comprising a connector that is engaged with a connector pin of said plastic socket pipe joint, a thermocouple and a holder for holding said connector pin and the thermocouple as one unit;

applying current through the connectors of each of the fusion welding plugs to an electric heating wire that is buried in the plastic socket pipe joint to cause the electric heating wire to generate heat;

measuring the temperature rise of the plastic socket pipe joint body with the thermocouple in each of the fusion welding plugs; and

suspending the application of current to said electric heating wire when the temperature of said plastic socket pipe joint body reaches a predetermined value.

8. A method as claimed in claim 7, further comprising the steps of:

measuring the temperature of the plastic socket pipe joint body with the thermocouples after the application of current to the electric heating wire has been suspended; and

indicating when the temperature of the plastic pipe joint body has decreased to a predetermined level at which each of the fusion welding plugs can be disconnected from the plastic socket pipe joint.

9. A method as claimed in claim 7, further comprising the step of generating a sound to indicate that the application of current has been suspended.

10. A method as claimed in claim 7, further comprising the step of generating a sound to indicate that the temperature of the plastic socket pipe joint body has decreased to a predetermined value at which the fusion welding plugs can be disconnected from the plastic socket pipe joint.

11. A method for connecting a plastic branch pipe joint to an end of a plastic pipe comprising the steps of:

mounting the plastic branch pipe joint on the end of the plastic pipe;

engaging fusion welding plugs to the plastic branch pipe joint, each of the fusion welding plugs comprising a connector that is engaged with a connector pin of the plastic branch pipe joint, a thermocouple, and a holder holding said connector pin and the thermocouple as one unit;

applying current through the connectors of each of the fusion welding plugs to an electric heating wire that is buried in the plastic branch pipe joint to cause the electric heating wire to generate heat;

measuring the temperature rise of said plastic branch pipe joint with the thermocouple in each of the fusion welding plugs; and

suspending the application of current to said electric heating wire when the temperature of said plastic branch pipe joint reaches a predetermined value.

12. A system for joining ends of two pieces of plastic pipe by thermal fusion comprising:

a substantially cylindrical plastic socket joint body having a first end and a second end, said first end for receiving an end of one of the pieces of plastic pipe and said second end for receiving the end of the other of the pieces of plastic pipe;

an electric heating wire embedded in the cylindrical inner surface of said plastic socket joint body and extending between the first and second ends thereof, said wire being coiled more tightly at the first and second ends than at a middle of said joint body;

a first connector pin electrically connected to one end of said heating wire and a second connector pin electrically connected to the other end of said heating wire;

a first hole in said joint body proximate said first connector pin and a second hole in said joint body proximate said second connector pin;

current supply means for providing a current to said first connector pin and said second connector pin to cause the current to flow through said electric heating wire to heat said cylindrical inner surface of said plastic socket joint body and the ends of the pieces of plastic pipe to thermally fuse the plastic socket joint body to the ends of the pieces of plastic pipe; and

temperature monitoring means provided in said first hole and said second hole for detecting the temperature of said plastic socket joint body proximate said first and second connector pins, said temperature control means for disabling said current supply means to discontinue the supply of current to said fist connector pin and said second connector pin when the temperature of said plastic socket joint body reaches a predetermined temperature.

# FIG. 1

# FIG. 3

EP 0 323 793 A1

# FIG. 2

EP 0 323 793 A1

**TEMPERATURE OF JOINT** (22)

**LAMP** (24)

| ABNORMAL | | |
|---|---|---|
| CUT | CURRENT | TIME |
| SENSOR | SMALL | SHORT |
| CORD | LARGE | LONG |

**EMERGENCY STOP SWITCH** (26)

**POWER SOURCE SWITCH** (20)

| TURN-ON | COOLING | TAKE-OFF |
|---|---|---|

**28 INDICATION LAMP**

**JOINT LAMP** (30)

**TURN-ON LAMP SWITCH** (32a)

**COOLING LAMP** (34)

**36 INDICATION LAMP**

**28a ACOUSTIC DEVICE**

4

5

5

FIG. 4

FIG. 5

FIG. 7 PRIOR ART

FIG. 6 PRIOR ART

**European Patent Office**

## EUROPEAN SEARCH REPORT

Application number

| DOCUMENTS CONSIDERED TO BE RELEVANT | | | EP 88440108.4 |
|---|---|---|---|
| Category | Citation of document with indication, where appropriate, of relevant passages | Relevant to claim | CLASSIFICATION OF THE APPLICATION (Int. Cl.4) |
| D,A | <u>US - A - 4 684 417</u> (GRANDCLEMENT) <br> * Totality * <br><br> -- | 1,7,12 | F 16 L 47/02 <br> F 16 L 41/04 <br> B 29 C 65/22 |
| A | <u>EP - A2 - 0 183 188</u> (VON ROLL AG) <br> * Totality * <br><br> -- | 1,7 | |
| A | <u>EP - A1 - 0 151 340</u> (BRITISH GAS CORP.) <br> * Totality * <br><br> -- | 1,7 | |
| A | <u>GB - A - 2 172 947</u> (BRITISH GAS CORP.) <br> * Totality * <br><br> -- | 7,12 | |
| A | <u>EP - A1 - 0 170 844</u> (GEORG FISCHER AKTIENGESELLSCHAFT) <br> * Totality * <br><br> ---- | 5 | **TECHNICAL FIELDS SEARCHED (Int. Cl.4)** <br><br> F 16 L 41/00 <br> F 16 L 47/00 <br> B 29 C 65/00 |

The present search report has been drawn up for all claims

| Place of search | Date of completion of the search | Examiner |
|---|---|---|
| VIENNA | 22-03-1989 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82